# EUROPEAN PATENT APPLICATION

(11) **EP 2 116 920 A1**
(43) Date of publication of application: **11.11.2009**
(21) Application number: 08706444.0
(22) Date of filing: 01.02.2008
(51) Int. Cl.: G06F 3/042

(54) **INFRARED TRANSMITTING OR RECEIVING CIRCUIT BOARD AND INFRARED TOUCH SCREEN APPLYING THEREOF**

(30) Priority: 02.02.2007 CN 200710026696; 19.06.2007 CN 200710028679
(71) Applicant: Ho, Wai, Zhongshan City, Guangdong 528412 (CN)
(72) Inventor: Ho, Wai, Zhongshan City, Guangdong 528412 (CN)
(74) Representative: Giles, Ashley Simon
(86) International application number: PCT/CN2008/000259
(87) International publication number: WO 2008/095412

(57) **Abstract**

An infrared transmitting or receiving circuit board which can be cut at the free location and be reconnected each other is disclosed. A power supply line, a grounding line, a clock signal line or a transfer protocol control line, an infrared pulse signal line and an infrared signal receiving line throughout the circuit board are set on the entire circuit board unit. A decoder with enabling a control input port, and a row driver and a column driver that are controlled and switched by the decoder are set on the one end of the circuit board unit. The circuit board unit can be reconnected and is able to make an infrared touch screen in any size. An infrared touch screen connects to the circuit board unit in parallel by the corresponding port of the controller unit respectively, therefore the synchronous, non-synchronous, and the segmental scanning can be realized.

## Description

### TECHNICAL FIELD

The present invention relates to the field of touch device using infrared transmitting and receiving optoelectronic components.

### BACKGROUND OF THE INVENTION

With the continuous development of infrared touch technology, it has been a matured technology today. In the view of its basic technological aspect, the touch device is quite simple. However, it is still difficult to produce many touch screens different in sizes and with high precision from one types of design. In US Patent No. 5,162,783, as shown in Figs. 1 and 2, all control circuits of the infrared touch device including the infrared transmitting and receiving diodes, the infrared transmitting and receiving circuits and the microprocessor are integrated on the printed circuit board unit all around the frame of the touch screen, and connected to the computer via a RS232 serial port or USB port. For the infrared transmitting and receiving diodes must be connected to the scanning circuit, if the circuit is cut, the infrared transmitting and receiving signals cannot be transmitted to the microprocessor or the corresponding circuits. It is then required from the prior art, that particularly redesign several parts of the entire transmitting and receiving array for the reason of making a large infrared touch screen when cutting is not possible to carry out. However the number of the infrared transmitting and receiving diodes and the control circuits thereof is increased according to the dimension of the screen, at the time, the independent parts of each other must be connected, and also the scanning and coordinate positioning of each independent part must be controlled through the microprocessor, and then the coordinate of the touch contact which intercepted by object is uploaded to a computer. Since we understand the circuit design in prior art is complicated, the circuit is normally needed to be modified when having a touch screen in different sizes, and as a result printed circuit board of the product must also be redesigned and manufactured.

To solve this problem, China Patent No. 200420066268.7 discloses an infrared touch screen using a flexible printed circuit (FPC) in which the extra unwanted circuit portion is folded. However, this is not effective at all, and the elongation and retraction ability is very limited, and may cause the defects even. It is also impossible to fold infrared transmitting and receiving circuit boards with many of inches into a touch screen with ten inches in size. This invention achieves only when the situation of making a small size variation. For example, when making a 42 inch and 43 inch touch screens, one FPC which is designed according to the above solution can be used in both the 42 and 43 inch touch screens, since the FPC is foldable to be adapted to the dimension variation between the 42 and 43 inch touch screens. It is obvious that the above technical solution can solve the problem only when the dimension variation is small. When the dimension variation between touch screens is relative large, the above solution is helpless, and the designer has to design different infrared transmitting and receiving circuit boards for different touch screens. Furthermore, the above technical solution also has some technical problems in practice. For example, the FPC is different from the normal printed circuit board in design requirements, the FPC can only be formed as a double-sided board, while the normal printed circuit board can be formed with four, six, eight or more layers, that is to say, a plurality of circuit layers can be provided between the top layer and the bottom layer of the circuit board. Normally, the infrared transmitting or receiving circuit board must be formed by a circuit board with four or more layers, or else the circuits cannot be completely layout on a narrow frame. If the FPC is used, two or more FPCs have to be folded, which increases the folding difficulty and the folding space. In another aspect, it is should be considered whether the electrical property and reliability of the FPC is affected after folding. Therefore, though the above solution is of certain advantages, however, the design principle of the scanning control circuit of the infrared transmitting and receiving diodes is complicated, and the above problems are not overcome from the root.

Nowadays, the different sizes of LCD or plasma TV had never stopped from generating, from 17 to 65 inches. Furthermore, televisions of the same dimension produced by different manufacturers may even have different sizes of circuit boards. The same situation happened in computer displays, rear projection televisions, projectors, etc. If the circuit board is designed according to each size of display, there may be hundreds of different circuit boards need to be re-engineered, which is obviously unreasonable and impossible to carry out and finally to meet the demand of market. Moreover, the quality, the performance, the reliability and the consistency of the product varied from one to another which caused by different dimensions of the circuit boards. If providing only a standard size with the touch screen which may not able fit into some display models. Also same thing happened to electronic white board, the dimension of electronic white board has to be redesigned though for different models. Further to the above problems, the mass production, marketing, and distribution of infrared touch products are greatly limited, and the infrared touch technology cannot be popularized.

It can be seen from the known existing infrared touch products, the printed circuit board has to be particularly re-designed according to the different sizes of the displays. Thus, the production lead time is long, and the investment for development is high. Furthermore, the stock keeping of different types of part designed for different sizes of touch screens are dramatically increased and not even possible to do. So, most of manufacturers are unwilling to take the risk of such kind of investment in the re-work of design and production. So far that, it is rare that for a manufacturer can handle all different types and sizes of infrared touch screens.

Obviously it is thus desired to invent an infrared transmitting or receiving circuit board which can be cut and reconnected, and is able to make the infrared touch screens in different sizes becomes very important now. Presently, it is difficult to manufacture a touch screen with a large dimension, and not even to say cutting and reconnecting of the circuit board, this is nearly impossible to achieve. Moreover, when the dimension of infrared touch screen is increased, keeping a high speed scanning becomes a keen requirement for a design. If the designed scanning frequency cannot reached, or the infrared signal is not transmitted and received efficiently, the response speed of capturing, and the touch operation performance will be affected, for example problems such as intermittence of strokes, a poor sensitive to touch, slow response or even that the strokes of hand writing cannot be realized. Therefore, due to the limitations from those current designs, it is the keen factor of present invention whether successfully bring the design of cutting and reconnection of the infrared transmitting and receiving circuit into reality becomes very important.

Obviously, it is really difficult to design a printed circuit board which can be freely cut to obtain different dimensions, until now there is no infrared touch products were made or found in the existing market which is made by such technology.

### SUMMARY OF THE INVENTION

In view of the shortcomings of prior art, it is an object of the present invention to provide an infrared transmitting or receiving circuit board unit in standard size which can be cut freely and reconnected together at a position according to the size requirement of a touch screen.

It is a further object of the present invention to provide an infrared touch screen in which the circuit board unit can be freely cut and reconnected in order to make the infrared touch screen in different sizes, and which is also able to provide parallel synchronous scanning of the infrared transmitting or receiving diodes as a result effectively improves the scanning and detection speed of intercepted touch contact location when the large size infrared touch screen is hereof produced.

The above object is achieved by the following technical solutions: an infrared transmitting or receiving circuit board unit, comprises infrared transmitting or receiving diodes arranged in arrays; wherein the infrared transmitting or receiving circuit board unit is provided throughout the entire circuit board unit with a power supply line, a grounding line, a clock signal line and an infrared signal receiving line; one end of the circuit board unit is provided with a row driver and a column driver, the signal input port of the row driver is connected to the clock signal line, and the signal output port of a row driver is connected to the signal input port of the column driver; column driving lines connected to each of the infrared transmitting or receiving diodes in the array are respectively connected to the column driver via column control transistors, row driving lines are respectively connected to the row control lines of the row driver.

Preferably, a decoder for enabling the row driver and the column driver and having an enabling control input port is provided on said one end of the circuit board unit.

Preferably, each infrared transmitting or receiving circuit board unit is provided, from one end to the other, with a power supply line, a grounding line, a clock signal line and an infrared signal receiving line. Two adjacent circuit board units can be wired together by soldering corresponding connection lines, wherein the power supply line and the grounding line is the power supply circuit for the whole touch screen. The row and column drivers are arranged at one end of the circuit board unit, the purpose of this arrangement is to provide an infrared transmitting or receiving circuit board unit which can be cut, this is because, in the transmitting or receiving circuit board unit, the infrared transmitting or receiving diode is connected by means of array, and when the circuit board unit is cut, the row driving circuit and the column driving circuit in the array will not be affected by such arrangement. After cutting, the portion of the circuit board unit with the row driver and the column driver can still control the enabling of all the infrared transmitting or receiving diodes via the row driver and the column driver. This portion of the circuit board unit becomes an infrared transmitting or receiving circuit board unit which is of a size different from the original standard size in dimension, and this portion of circuit board unit can be reconnected with other circuit board units to obtain a circuit board unit with new size in dimension.

Preferably, the row driver and the column driver are both provided with a clock input port. The clock input port of the row driver is connected to the clock signal generator. The pulse signal with a cycle of T generated by the clock signal generator enables only one row control line every time, and this row control line enable a row driving line in the array via transistor. After *n*^{th} number of the row control lines are enabled in turn, that is to say, after *n*^{th} number of the clock cycle T, the clock output port of the row driver generates a pulse signal having a cycle of n x T. The pulse signal is inputted into the clock input port of the column driver to allow the column driver to enable the next column control line each time, this process has to loop until the scanning of all the rows and columns in the entire infrared transmitting or receiving array is finished. In the infrared transmitting or receiving circuit board unit of the entire touch screen, this method that only one clock signal line is used for controlling the scanning of all the connected row and column drivers is the best and simplest way to realize synchronous transmitting and receiving. Such method has the advantages such as high speed in scanning, short in switching delay and use only small amount of control lines, and this design is particularly suitable for making the large size infrared touch screen. Because the clock input ports of the transmitting circuit board unit and the receiving circuit board unit use the same clock signal source, the scanning of each pair of transmitting or receiving diodes is hereof synchronized. If the clock signal generator produces two clock signals having different time in sequence, and that is the two clock signal sources are respectively inputted into the clock input ports of the row drivers of the transmitting or receiving circuit, thus non-synchronous scanning can be realized by non-synchronized input clock signal source. The row driver and the column driver may be a counter, a shift register or an integrated circuit with the equivalent function. The decoder may be a shift register, an I/O expander or a decoder integrated circuit.

Preferably, the circuit board unit is provided with at least one set of cable soldering joints for connecting with the power supply line, the grounding line, the clock signal line and the infrared signal receiving line. The cable soldering joints facilitate the soldering operation and reduce the workload during reconnection.

In the above technical solution, the enabling or disabling of the row driver and column driver on the transmitting or receiving circuit board unit is controlled by a decoder which is able to realize parallel synchronous scanning or sequential scanning of the circuit board unit after reconnection is made. The circuit board unit can also be made without using a decoder, e. since the clock signal of each circuit board unit is connected in parallel, when without using the enabling control of the decoder, the row and column drivers in each circuit board unit follow the input clock signal to perform scanning so as to realize the parallel synchronous scanning of the circuit board unit, however such arrangement without using a decoder, is in a consequence that the sequential scanning from the first circuit board unit to the last circuit board unit throughout the touch screen cannot be realized.

Alternatively, as another technical solution from the present invention, an infrared transmitting or receiving circuit board unit comprises infrared transmitting or receiving diodes arranged in array; wherein the infrared transmitting or receiving circuit board unit is provided throughout the entire circuit board unit with a power supply line, a grounding line, a transfer protocol control line and an infrared signal receiving line; one end of the circuit board unit is provided with a row driver and a column driver connected to the transfer protocol control line; column driving lines connected to each of the infrared transmitting or receiving diodes in the array are respectively connected to the column driver via column control transistors, and row driving lines are respectively connected to the row control lines of the row driver. Control lines of data transfer protocol such as SMBus, SPI, CAN, QSPI, MICROWIRE, I²C and UART can be used, or address line is used to connect a row and column of the row and column driver, in order to realize the circuit connection of the circuit board unit after cutting and reconnection.

Preferably, a decoder for enabling the row driver and the column driver and having an enabling control input port is provided on said one end of the circuit board unit.

Preferably, the circuit board unit is provided throughout the entire circuit board unit with enabling control lines connected to the enabling input port of the decoder, which can be used for enabling or disabling one or several row and column drivers on infrared transmitting or receiving circuit board unit, so that several infrared transmitting or receiving circuit board unit can be simultaneously carried out parallel synchronous scanning. The scanning cycle is thus shortened, which overcomes the problem of slow scanning due to the increasing of dimension of large touch screen.

Preferably, the circuit board unit is provided throughout the entire circuit board unit with an infrared pulse signal line connected to the column control transistor. When the transmitting array starts scanning, each connected infrared transmitting diode emits infrared with a certain frequency, which improves the anti-noise interference capability of the infrared transmission.

Preferably, the row and column driving lines wired with each of the infrared transmitting or receiving diodes in the array are respectively connected to the row and column driver via row and column control transistors. The collector of each of the row control transistor is connected to the power supply line, the base of each of the row control transistor is connected to the control line of the row driver, and the emitter of each of the row control transistor is connected to the row driving line. The collector of each of the column control transistor is connected to the column driving line, the base of each of the column control transistor is connected to the control line of the column driver, and the emitter of each of the column control transistor is connected to the infrared pulse signal line or infrared signal receiving line or grounding line. The transistor is used as a switch and to improve the current drive capability, and prevents the overload of integrated circuit of the row and column driver from damaging the circuit. In the circuit board unit, the transistor connected to the row and column driving line in the infrared transmitting and receiving array may be NPN type; a PNP type transistor may also be used, and the connection manner of the emitter and the collector of the row and column transistors changes correspondingly; however, no matter which type of transistor is used, its purpose is to improve the current drive capability and provide a switching function of the row and column driving lines. During the operation, if the output of the control lines of the row and column drivers is low potential effective, a PNP type of transistor is used; otherwise if high potential effective, a NPN type of transistor is used. Although the connection manners of NPN and PNP are different, the connection manners will not affect the purpose that the row and column drivers control the scanning of infrared transmitting and receiving array.

Preferably, the output ports of the decoder are connected to one end of a switching array, and the other end of the switching array is connected to the enabling ports of the row driver and the column driver. The presetting options of the switching array on the circuit board unit can be used to control the enabling or disabling of the row and column drivers, and this in a consequence, the control of activating or deactivating the operation of the infrared transmitting or receiving array can be achieved hereof.

It is a further object of the present invention, and is achieved by the following technical solution: an infrared touch screen comprises a plurality of infrared transmitting or receiving circuit board unit provided with infrared transmitting or receiving diode array, and a control device unit provided with control ports;

The control device unit comprises a microprocessor provided with enabling control output terminals, a clock signal generator, an infrared signal receiver connected with the microprocessor, a power supply terminal, and a ground terminal, wherein the clock signal generator provided with a clock signal output terminal is connected to the microprocessor , and the infrared signal receiver is provided with an infrared signal receiving terminal, or a microprocessor is used as a clock signal generator which controlling the row driver for scanning the array in the transmitting or receiving circuit instead of using an individual clock signal generator;

Each of the circuit board units is provided throughout the entire circuit board unit with a power supply line, a grounding line, a clock signal line and an infrared signal receiving line; one end of the circuit board unit is provided with a row driver and a column driver, wherein the signal input port of the row driver is connected to the clock signal line, and the signal output port of the row driver is connected to the signal input port of the column driver; no matter whether the clock signal is generated by a clock signal generator or by a microprocessor, a clock signal can be simultaneously connected to the clock input ports of the row driver on the transmitting and receiving circuits so as to realize the synchronous scanning; alternatively, two clock signal sources with different time in sequence generated by a microprocessor or by a clock signal generator can be respectively connected to the clock input ports in the transmitting or receiving circuit board unit, and with such arrangement in hence, a non-synchronous sequential signal is generated and to realize the non-synchronous scanning; the column driving lines of each of the infrared transmitting or receiving diodes in the array are respectively connected to the column driver via column control transistors, the row driving lines are respectively connected to the row control lines of the row driver;

The power supply line of the circuit board unit is connected in parallel to the power supply terminal of the control device unit, the grounding line is connected in parallel to the ground terminal, and the clock signal line is connected in parallel to the clock signal output terminal. The infrared signal receiving line is connected in parallel to the infrared signal receiving terminal.

Preferably, a decoder having an enabling control input port for enabling the row driver and the column driver, and is provided on said one end of the circuit board unit. The enabling control input port of the decoder is connected to the enabling control output port of the microprocessor.

After the infrared transmitting or receiving circuit board unit being cut and reconnected into an infrared touch screen, the connection lines of each circuit board unit are connected respectively to the corresponding ports from the control device unit, and finally infrared touch screens of different dimension can be obtained, and the circuit design of the touch screen is simplified vastly. By the microprocessor controls the decoders on different circuit board units to activate and deactivate those different row and column drivers, the segmented parallel synchronous scanning or segmented parallel non-synchronous scanning or synchronous sequential scanning or non-synchronous sequential scanning can be realized. Thus, in turn the scanning speed of the infrared touch screen is greatly improved.

In the above technical solution, when it is unnecessary to use the decoder for controlling in the transmitting or receiving circuit board units, it is thus unnecessary in the control device unit, to provide the enabling control output terminal and to provide the enabling control line from the microprocessor in the circuit, while through the transmitting and receiving circuit board units, the row and column drivers connected in parallel to the control unit, and in such arrangement can realize the segment parallel synchronous scanning of the circuit board unit by following the time sequence from the clock signal line.

Alternatively, an infrared touch screen comprises a plurality of infrared transmitting or receiving circuit board units having infrared transmitting or receiving diodes in arrays; a control device unit having control ports;

Wherein the control device unit comprises a microprocessor having a transfer protocol control output terminal, an infrared signal receiver connected to the microprocessor, a power supply terminal and a ground terminal; the infrared signal receiver is provided with infrared signal receiving terminal;

Each circuit board unit is provided throughout the entire circuit board unit with a power supply line, a grounding line, a transfer protocol control line and an infrared signal receiving line; one end of the circuit board unit is provided with a row driver and a column driver respectively connected to the transfer protocol control line; column driving lines connected to each of the infrared transmitting or receiving diodes in the array are respectively connected to the column driver via column control transistors, row driving lines are respectively connected to the row control lines of the row driver;

The power supply line is connected in parallel to the power supply terminal of the control device unit, the grounding line is connected in parallel to the ground terminal, the infrared signal receiving line is connected in parallel to the infrared signal receiving terminal, and the transfer protocol control line is connected to the transfer protocol control output terminal of the microprocessor.

Preferably, the microprocessor is provided with an enabling control output terminal, a decoder for enabling the row driver and the column driver is provided on said one end of the circuit board unit, the enabling control input port of the decoder is connected to the enabling control output terminal of the microprocessor. In such arrangement, either the enabling of row and column drivers is controlled by the transfer protocol, or is directly controlled by the microprocessor, and thus in turn to provide another approach of realizing the parallel scanning.

Preferably, the control device unit is provided with an infrared pulse generator having an infrared output terminal. The circuit board unit is provided throughout the entire circuit board unit with an infrared pulse signal line connected to the column control transistor. The infrared pulse signal line is connected in parallel to the infrared output terminal from the control device unit. When the transmitting array starts scanning, each connected infrared transmitting diode emits infrared in a certain frequency, which improves the anti-noise interference capability of the infrared transmission.

Preferably, on each of the infrared circuit board units, the row driving lines, which are connected to each infrared transmitting or receiving diode, are respectively connected to the row driver via row control transistors. The emitter of each of the row control transistor is connected to the row driving line, the base of each of the row control transistor is connected to the control line of the row driver, and the collector of each of the row control transistor is connected to the power supply line.

Preferably, the circuit board unit is provided throughout the entire circuit board unit with enabling control lines connected to the enabling input port of the decoder, and the enabling control line is connected in parallel to the enabling control output port of the microprocessor.

Preferably, the output ports of the decoder are connected to one end of a switching array, and the other end of the switching array is connected to the enabling ports of the row driver and the column driver.

### Advantages of the Invention

The present invention is simple in structure, stable in performance, high precision and low costs, and is also suitable for mass production. For the touch screen of the present invention is made by size cutting and then reconnecting from one or several standard size infrared transmitting or receiving circuit board units, it is unnecessary to reengineer the circuits board design before making a touch screen according to the size of a flat panel display or LCD TV, which in turn dramatically reduces the manufacturing costs and improves the speed of generating a new product in different variety, and moreover it can be produced in a stable quality high reliability. Therefore, the production efficiency is greatly improved, and the cost is reduced, in the consequences, the infrared touch screen with large dimension in many different sizes can then be realized very easily.

### BRIEF DESCRIPTION OF THE DRAWINGS

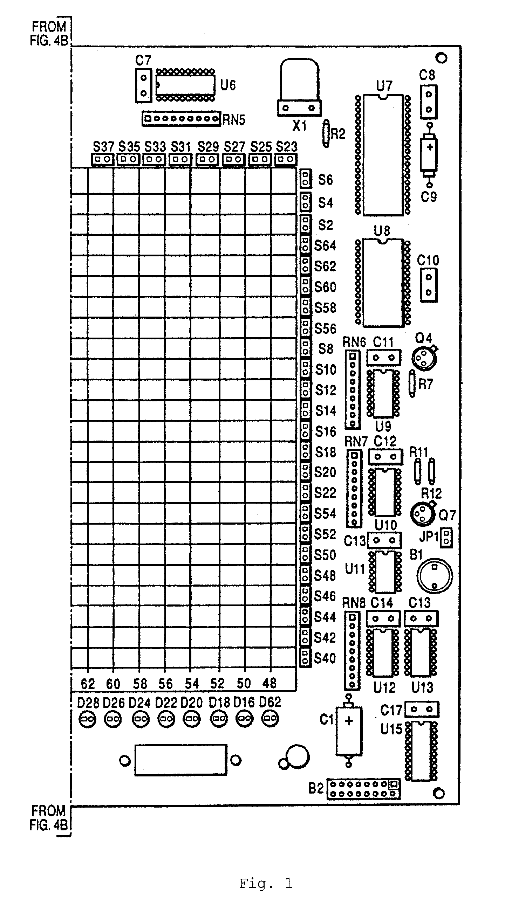

Fig. 1 is an arrangement from a prior art illustrating the infrared transmitting or receiving circuit board unit;

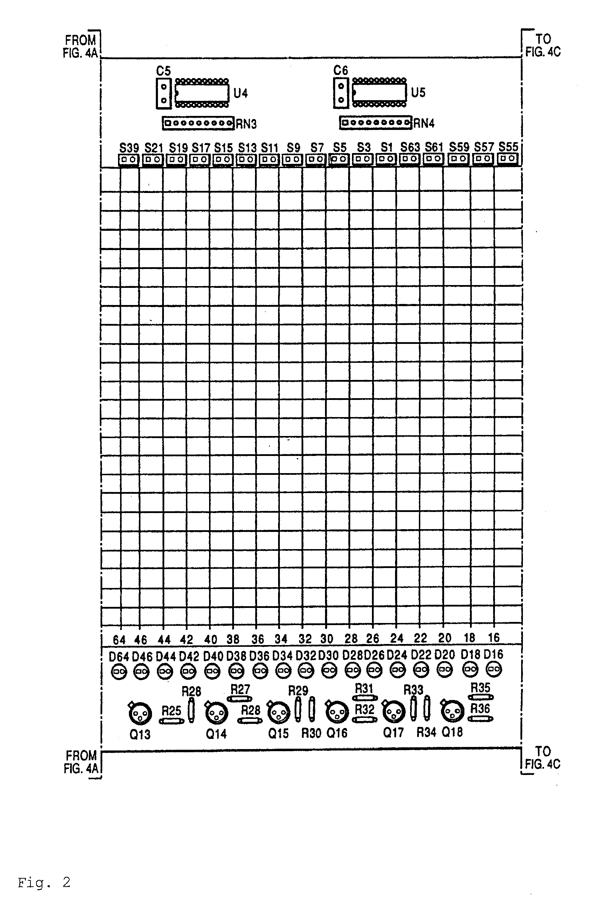

Fig. 2 is another arrangement from a prior art illustrating the infrared transmitting or receiving circuit board unit;
Fig. 3 is an overhead view of the present invention which illustrating the cutting process of a standard size circuit board unit of an infrared touch screen;
Fig. 4 is an overhead view of the present invention illustrating the reconnecting process of several circuit board units of an infrared touch screen;
Fig. 5 is a schematic view of the present invention illustrating the parallel connection of a transmitting or receiving circuit board units in an infrared touch screen;
Fig. 6 is a schematic circuit diagram of the present invention illustrating of an infrared transmitting or receiving circuit board unit of from the first embodiment;
Fig. 7 is a schematic circuit diagram of the present invention illustrating of a control device unit from the first embodiment;
Fig. 8 is a schematic circuit diagram of the present invention illustrating of an infrared transmitting or receiving circuit board unit from the second embodiment;
Fig. 9 is a schematic circuit diagram of the present invention illustrating of a control device unit from the second embodiment.

1. Touch screen, 2. Infrared transmitting or receiving cluster, 3. Infrared transmitting or receiving cluster , 4. A standard size transmitting or receiving circuit board unit, 5. An infrared transmitting or receiving circuit board unit after cutting, 6. Another infrared transmitting or receiving circuit board unit after cutting, 7. A cable soldering joint, 8. Another cable soldering joint, 9. Another cable soldering joint, 10. Infrared transmitting or receiving diode in arrays, 11. An decoder, 12. An row driver, 13. An column driver, 14. An infrared transmitting cluster, 15. An infrared receiving cluster, 16. The Control device unit, 17. USB cable connection, 18. Transfer protocol control line, 19. Infrared signal receiving line, 20. Clock signal line, 21. Infrared pulse signal line, 22. Power supply line, 23. Grounding line, 24. Enabling control line, 25. Row control transistor, 26. Column control transistor, 27. Switching array, 28. Microprocessor, 29. Clock signal generator, 30. Infrared signal receiver, 31. Infrared pulse generator, 32. Infrared signal receiving terminal, 33. Infrared pulse output terminal, 34. Clock signal output terminal, 35. Transfer protocol control line terminal, 36. Enabling control output terminal, 37. Power supply terminal, 38. Ground terminal, 39. The Computer

### DETAILED DESCRIPTION OF THE PREFERRED EMBODIMENT

### Embodiment 1

Many aspects of the invention can be better understood in the following embodiments with reference to the provided drawings.

An infrared touch screen comprises a plurality of infrared transmitting or receiving circuit board units provided with infrared transmitting or receiving diodes 10 in arrays, and a control device unit 16 provided with unit control ports;

The control device unit 16 comprises a microprocessor 28 provided with enabling control output terminals 36, a clock signal generator 29, an infrared pulse generator 31 provided with an infrared pulse output terminal 33, an infrared signal receiver 30 connected to the microprocessor 28, a power supply terminal 37, and a ground terminal 38, wherein the clock signal generator 29 is connected to the microprocessor 28 and provided with a clock signal output terminal 34, and the infrared signal receiver 30 is provided with an infrared signal receiving terminal 32;

Each of the circuit board units is provided throughout the entire circuit board unit with a power supply line 22, a grounding line 23, a clock signal line 20, enabling control lines 24, an infrared pulse signal line 21 and an infrared signal receiving line 19. One end of the circuit board unit is provided with a decoder 11 having enabling control input ports, a row driver 12 and a column driver 13 the enabling of which is controlled by the decoder 11, wherein the clock signal input port of the row driver 12 is connected to the clock signal line 20, and the signal output port of the row driver is connected to the signal input port of the column driver 13; column driving lines of each of the infrared transmitting or receiving diodes 10 in the array are respectively connected to the column driver 13 via column control transistors 26, the row driving lines are respectively connected to the row control lines of the row driver 12, the emitter of each of the row control transistor 25 is connected to the row driving line, the base of each of the row control transistor 25 is connected to the control line of the row driver 12, and the collector of each of the row control transistor 25 is connected to the power supply line 22; the collector of each of the column transistor 26 is connected to the column driving line, the base of each of the column transistor 26 is connected to the control line of the column driver 13, and the emitter of each of the column transistor 26 is connected to the infrared pulse signal line 21 or infrared signal receiving line 19 or grounding line 23;

The power supply line 22 of the circuit board unit is connected in parallel to the power supply terminal 37, the grounding line 23 is connected in parallel to the ground terminal 38, the clock signal line 20 is connected in parallel to the clock signal output terminal 34, the infrared pulse signal line 21 is connected in parallel to the infrared pulse output terminal 33, the infrared signal receiving line 19 is connected in parallel to the infrared signal receiving terminal 32, and the enabling control input port from the decoder 11 is connected to the enabling control output terminal 36 of the microprocessor 28 via enabling control lines 24.

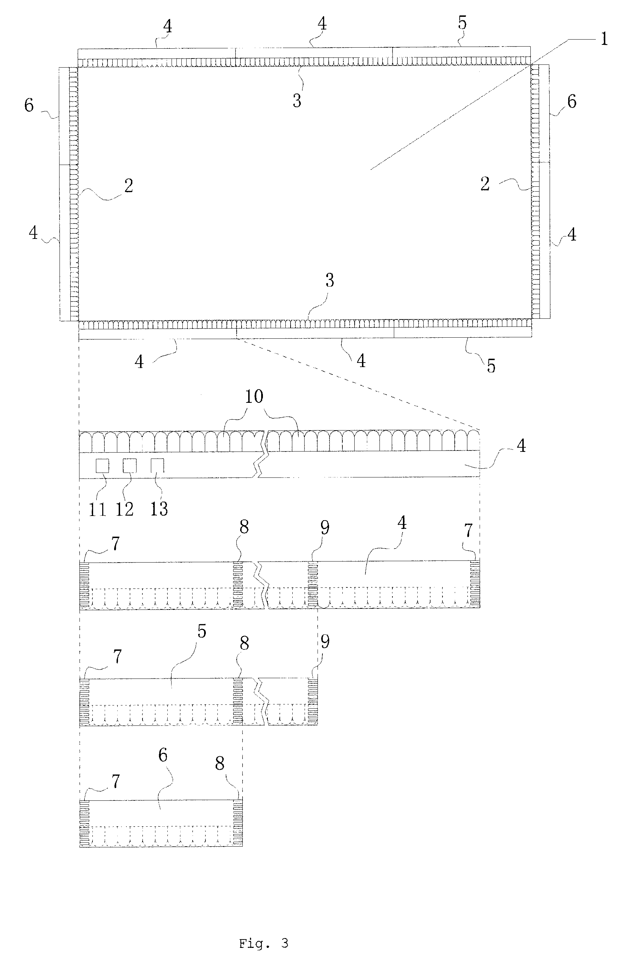

Referring to Fig. 3, an infrared touch screen 1 comprises an infrared transmitting cluster 2 consisting of a standard size transmitting circuit board unit 4 and an infrared transmitting circuit board unit after being cut 6, an infrared transmitting cluster 3 consisting of standard size transmitting circuit board units 4 and an infrared transmitting circuit board unit after being cut 5, Infrared receiving clusters 2, 3 are allocated in opposite direction to the infrared transmitting clusters 2, 3 are correspondingly provided, and the circuit structure thereof is identical to the infrared transmitting cluster, The standard size transmitting or receiving circuit board unit 4 comprises infrared transmitting or receiving diodes 10 in arrays, this standard size transmitting or receiving circuit board unit 4 is provided throughout the entire circuit board unit with a power supply line 22, a grounding line 23, a clock signal line 20, enabling control lines 24, an infrared pulse signal line 21 and an infrared signal receiving line 19, one end of the circuit board unit is provided with a decoder 11 having enabling control input ports, a row driver 12 and a column driver 13 the enabling of which is controlled by the decoder 11, wherein the signal input port of the row driver 12 is connected to the clock signal line 20, and the clock signal output port is connected to the clock signal input port of the column driver 13; column driving lines of each of the infrared transmitting or receiving diodes 10 in the array are respectively connected to the column driver 13 via column control transistors 26, the row driving lines are respectively connected to the row control lines of the row driver 12, the collector of each of the column control transistor 26 is connected to the column driving line, the base of each of the column control transistor 26 is connected to the control line of the column driver 13, and the emitter of each of the column control transistor 26 is connected to the infrared pulse signal line 21 or the infrared signal receiving line 19 or the grounding line 23. The row driving lines connected to each of the infrared transmitting or receiving diodes 10 in the array are respectively connected to the row drivers 12 via the row control transistors 25. The emitter of each of the row control transistor 25 is connected to the row driving line, the base of each of the row control transistor 25 is connected to the control line of the row driver 12, and the collector of each of the row control transistor 25 is connected to the power supply line 22.

The circuit board unit is provided with several sets of cable soldering joints which include two sets of cable soldering joints 7 on two ends of the circuit board unit 4. The cutting and reconnecting of the circuit board unit 4 will be described in detail hereinafter.

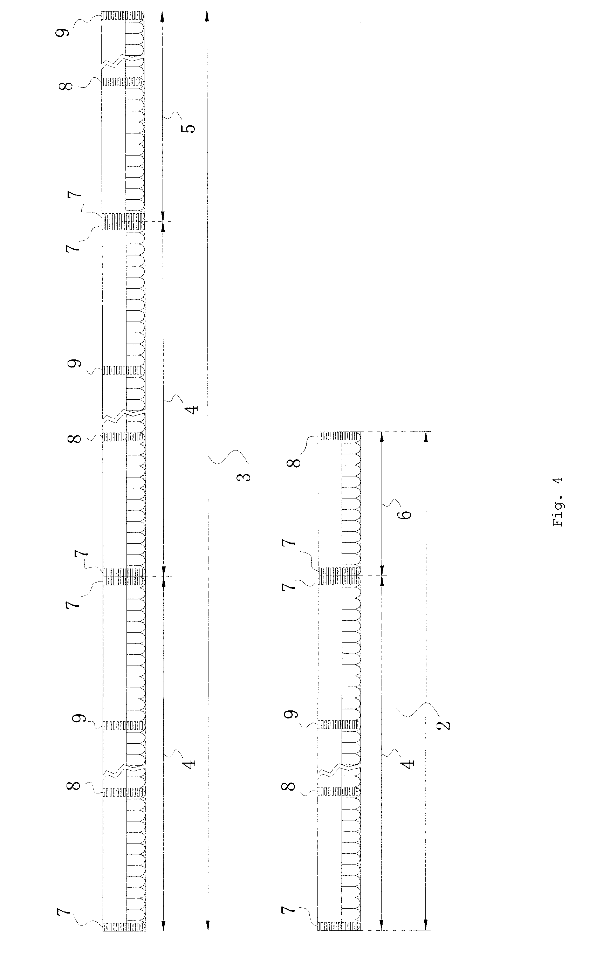

Referring to Fig. 3, the standard size infrared transmitting or receiving circuit board unit 4 is of a designed with a standard size in dimension, wherein the cable soldering joints 7, 8 and 9 are examples used for explaining how to use the circuit board unit 4 to form a transmitting or receiving cluster 2 or 3. A cutting position is provided on the right side of each set of cable soldering joints, and after cutting, a set of cable soldering joints on the left side is remained as normal, and this set of cable soldering joints can be used for connection with the next circuit board unit. For example, by cutting at the cutting position of a set of cable soldering joints 9, a circuit board unit 5 is made from a standard size circuit board unit 4, and two circuit board units 4 are reconnected together as shown in Fig. 4, i.e. , a set of cable soldering joints 7 at the right end of the first circuit board unit 4 is jointed to a set of cable soldering joints 7 at the left end of a second circuit board unit 4 by FPC or FFC soldering, and then a set of cable soldering joints 7 at the right end of the second circuit board unit 4 is jointed to a set of cable soldering joints 7 at the left end of a next circuit board unit 5 by FFC or FPC soldering to obtain a transmitting or receiving cluster 3 as shown in Figs. 3 and 4. According to the same method, another standard size circuit board unit 4 is cut to form a circuit board unit 6 which is then jointed with another circuit board unit 4 to form a transmitting or receiving cluster 2 as shown in Figs. 3 and 4. Two sets of cable soldering joints at the adjacent portion of two circuit board units in two adjacent clusters are jointed together by FFC or FPC soldering such that the transmitting cluster 2 is connected to the transmitting cluster 3, the receiving cluster 2 is connected to the receiving cluster 3, and the transmitting clusters 2, 3 are connected to the receiving clusters 2 or 3, and finally one set of cable soldering joints is selected to connect with a corresponding control ports from control device unit 16 so as to form a complete circuit for an entire infrared touch screen device.

The inventive size cutting and reconnecting method of the present invention can be used in both an infrared transmitting circuit board unit and a receiving circuit board unit. Whatever the size of the dimension of the touch screen is needed, it is only necessary to cut at appropriate cutting position where according to the dimension requirement, a new size can then be obtained by having those several circuit board units connected together via FPC or FFC soldering. The circuit can still maintains its function after cutting, because the row driver, the column driver and the decoder are all specially arranged together at one end of the circuit board unit, as a result after the cutting, the remaining portion where still having the infrared transmitting or receiving diodes are connected, the row driving line and the column driving line are still connected with the row driver and the column driver via the transistors, besides the corresponding circuit lines are provided throughout the entire circuit board unit, and a set of cable soldering joints is provided on the left side of each cutting portion, Therefore, various sizes of touch screens can be obtained by using this inventive method.

The above description explains the way how to obtain the transmitting and receiving units with different sizes by using an infrared transmitting or receiving circuit board unit with a standard size in dimension. The working mechanism of the inventive circuit after reconnecting is to be described in detail hereinafter.

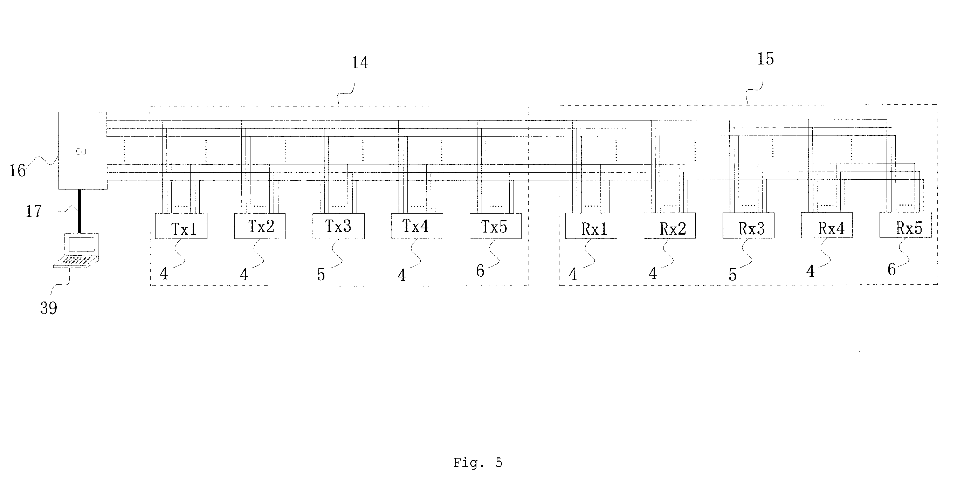

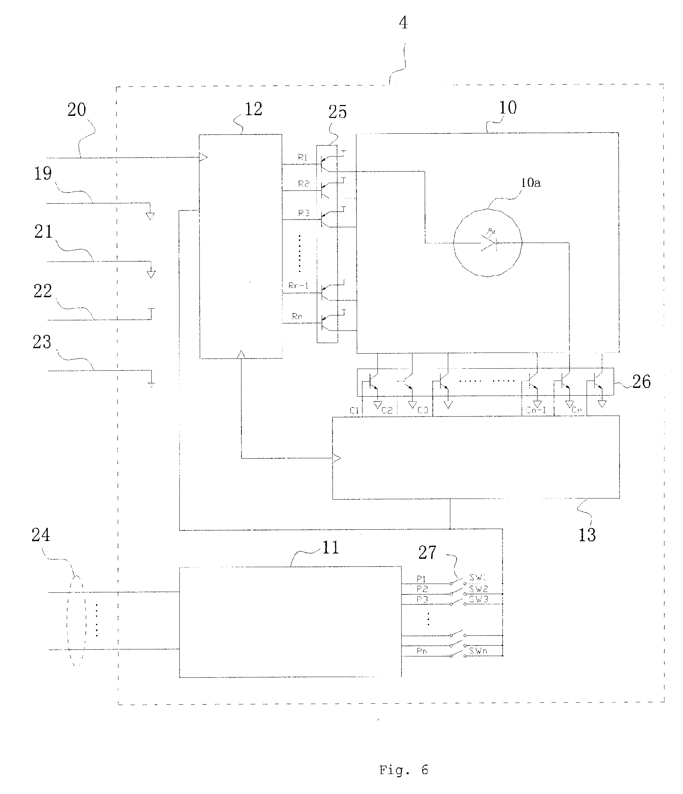

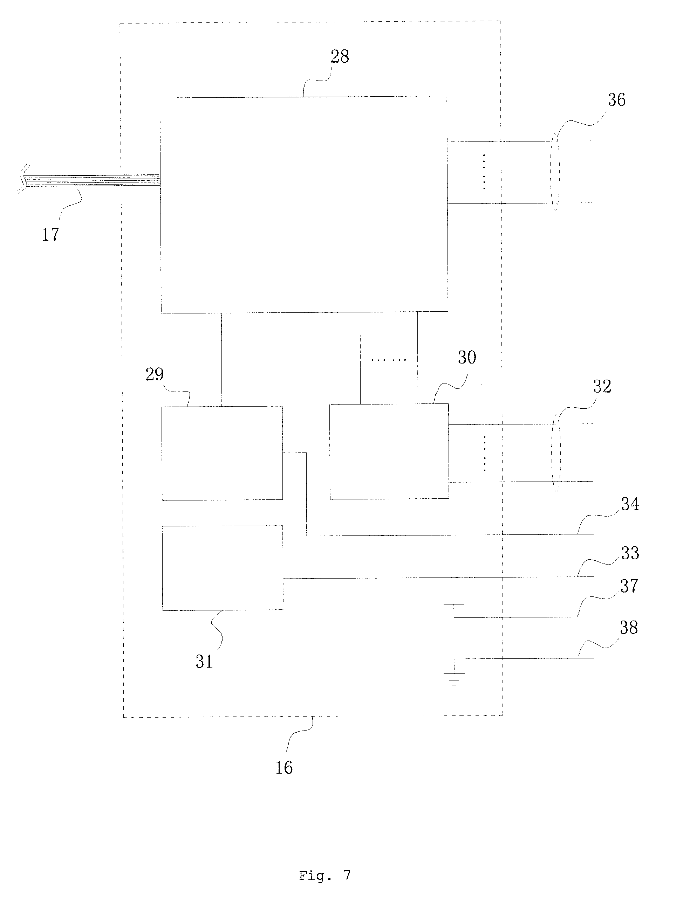

Referring to Fig. 5, each infrared transmitting cluster or receiving cluster comprises several arrays of transmitting or receiving circuit board units 4, 4, 5, 4, and 6, and each transmitting or receiving circuit board unit comprises a transmitting diode or receiving diode array 10 consisting of several transmitting diodes or receiving diodes. In the transmitting circuit board units 4, 4, 5, 4, 6 of the present invention, various types of circuit lines 19, 20, 21, 22, 23, 24 as shown in Fig. 6 are connected correspondingly to form a large infrared transmitting cluster 14, and in the same way, the receiving circuit board units 4, 4, 5, 4, 6 are connected to form a large receiving cluster 15, ,at the time it is also various types of circuit lines 19, 20, 21, 22, 23, 24 are respectively connected in parallel to the corresponding ports 32, 34, 33, 37, 38, 36 of the control device unit 16 shown in Fig. 7, and the control device unit 16 is connected to the computer 39 via USB cable connection 17. In order to improve the scan speed, the transmitting cluster and the receiving cluster may be divided into two parts to proceed with synchronous scan. For example, as shown in Fig. 5, the arrays Tx1, Tx2 in the transmitting circuit board units 4 and the arrays Rx1, Rx2 in the receiving circuit board units 4 are proceeded with synchronous scan, while the arrays Tx3, Tx4, Tx5 in the transmitting circuit board units 5, 4, 6 and the arrays Rx3, Rx4, Rx5 in the receiving circuit board units 5, 4, 6 are proceeded with synchronous scan in a same scanning period of Tx1, Tx2 and Rx1, Rx2, and this is the reason that control device unit 16 is connected to the enabling control line 24 at the enabling control terminal to control the decoder 11 to send out the enabling or disabling address information is capable to control the activating or deactivating of one or several infrared transmitting or receiving circuit board units in a time, thereby the transmitting or receiving diode array can be divided into segments which can be scanned synchronously in parallel, and the scan speed of the touch screen is in hence improved. The way of realization of such innovative scanning and receiving is to be described in detail hereinafter.

Fig. 6 is a schematic circuit diagram of an infrared transmitting or receiving circuit board unit 4 with standard in dimension. Fig. 7 is a schematic circuit diagram of a control device unit 16. The clock signal line 20, the power supply line 22 and the grounding line 23 on the circuit board unit 4 are respectively connected to the corresponding ports 34, 37, 38 in the control device unit 16. The infrared pulse signal line 21 is connected to the infrared pulse signal output terminal 33. The infrared signal receiving line 19 is connected to the infrared signal receiving terminal 32. The clock signal line 20 is connected to the clock input port of the row driver 12, and the clock output port of the row driver 12 is connected to the input port of the column driver 13. The joint of the collectors of the row control transistors 25 is connected to the power supply line 22, the bases are respectively connected to the control lines R1...Rn of the row controller 12, and the emitters are connected to the row driving lines of the infrared transmitting or receiving diodes 10 in arrays. The joint of the emitters of the column transistors 26 is connected to the infrared signal receiving line 19 or the infrared pulse signal line 21, the bases are respectively connected to the control lines C1...Cn of the column controller 13, and the collectors are connected to the column driving lines of the infrared transmitting or receiving diodes 10. The enabling control lines 24 of the decoder 11 are respectively connected to the enabling control ports 36 of the microprocessor 28, the output ports of the decoder 11 are connected to one terminal of a switching array 27, and the other end of the switching array 27 is connected to the enabling ports of the row driver 12 and the column driver 13. During the manufacturing of the circuit board unit of the touch screen, the P1 is connected to the SW1 in the switching array 27 of Tx1 in the transmitting circuit board units 4 as shown in Fig. 5 that requires parallel scanning, and the P2 is connected to the SW2 in the switching array 27 of Tx2. In the same way, the P1 is connected to the SW1 in the switching array 27 of Rx1 in the receiving circuit board units 4; the P2 is connected to the SW2 in the switching array 27 of Rx2. Similarly, the P3 is connected to the SW3 in the both of switching array 27 of Tx3 and Rx3, the P4 is connected to the SW4 in the Rx4 and Rx4, and the P5 is connected to the SW5 in the Tx5 and Rx5. The way of connection can be realized by soldering or by using a DIP switch. During segment scanning in parallel, the decoder 11 is controlled by the address code information which sent out by the controller unit 16 through the enabling control line 24, such that the output port P1 of the decoder 11 is at low potential and the output port P2 is at high potential, and thus the row driver 12 and the column driver 13 that control the Tx1 and Rx1 arrays are enabled. At the time, since the output port P2 is at high potential, the row driver and the column driver of Tx2 and Rx2 are disabled. It should be noted that the enabling control of the row driver and the column driver is lowpotential effective. When a pulse with a first cycle of T is inputted into the clock signal input terminal of the row driver 12, the row driver 12 only enables the first row control line R1. When a second pulse is inputted, only the second row control line R2 is enabled. This process is looped until all the control lines R1 to Rn has been scanned in sequence, i.e. after *n*^{th} number of pulse cycles, a pulse signal with a cycle of (T)x(n)which generated by the row driver 12 is inputted into the column driver 13 to enable the column control line C2 of the column driver 13, the system has to repeat the following cycle which started from the first control line C1 scanning at a range R1...Rn, and followed by the second control line C2 scanning at a range R1...Rn, the system is repeating until the control line Cn has been finished. After the scanning of each infrared transmitting or receiving diode in the Tx1 and Rx1 arrays is finished, an address code information sent out by the control device unit 16 to the decoder 11, an cause a low potential is output to P2 which enables the Tx2, Rx2, and the P1 output with high potential to disable the Tx1 and Rx1.The scanning of Tx2 and Rx2 can also be achieved by the above mechanism. By having the P1 and P2 output high and low potential in turns to scan the arrays (Tx1, Rx1) and (Tx2, Rx2) circularly. During the same scanning cycle of P1, P2, the P3, P4, P5 output with high and low potential in turns to circularly the control of arrays (Tx3, Rx3), (Tx4, Rx4), (Tx5, Rx5) to achieve segment scanning of different infrared transmitting or receiving circuit board units in parallel, thereby the cyclic scanning of different segments by using a single clock signal source is established.

The soldering joint of the infrared signal receiving line 19 on the infrared receiving board Rx1, Rx2 is connected to the first soldering joint preset on the receiving board for the infrared signal receiving terminal 32 in the control device unit 16, the infrared signal receiving line 19 of Rx3, Rx4, Rx5 is connected to the second soldering joint preset on the receiving board for the infrared signal receiving terminal 32. The two receiving sections of segment scanning are established. The signal of the two receiving sections is inputted into an infrared signal receiver 30 from the control device unit 16 for processing, and transfer result to a microprocessor 28 for judgment processing of the intercept location. If the segment scanning is unnecessary, the SW1 of Tx1 and Rx1 can be connected to the P1, the SW2 of Tx2 and Rx2 can be connected to the P2, the SW3 of Tx3 and Rx3 can be connected to the P3, the SW4 of Tx4 and Rx4 can be connected to the P4, the SW5 of the Tx5 and Rx5 can be connected to the P5, and then the decoder 11 is controlled by the address control signal sent by the control device unit 16 to enable the P1, P2, P3, P4 and P5 to cyclic output high and low potential one after another in turn, thus sequence scanning operation of all the infrared transmitting or receiving circuit board units 4 on the touch screen device can be achieved.

Fig. 7 shows a structure of the control device unit 16 which comprises one or a plurality of microprocessors 28. The microprocessor 28 is provided with enabling control terminals 36 which are respectively connected to the enabling control lines 24 from the circuit board units 4. The microprocessor 28 is further connected to the clock signal generator 29 having a clock signal output terminal 34, and is also further connected to an infrared signal receiver 30. The control device unit 16 is connected to a computer 39 by USB port. The clock signal generated by the clock signal generator 29 is connected to the corresponding clock signal line 20 in each circuit board unit 4 via the clock signal output port 34. The pulse signal generated by the infrared pulse generator 31 is connected to the infrared signal line 21 in each circuit board unit 4. The infrared signal receiving terminals 32 of the infrared receiver 30 are respectively connected to the infrared signal receiving lines 19 in the circuit board units 4. The power supply terminal 37 is connected to the power supply lines 22 of the circuit board units 4. The ground terminal 38 is connected to the grounding lines 23.

When the touch screen starts working, the clock signal generator 29 sends out a cycle pulse to each transmitting or receiving circuit board unit 4 via the clock signal line. Since the clock signal of the transmitting and receiving array is from the same signal source, the infrared transmitting or receiving diode in the array can perform synchronous scanning. That is to say, the clock signal generator 29 sends out a cycle pulse to scan a pair of infrared transmitting or receiving diodes, while the microprocessor 28 starts counting the pulses of the clock signal generator 29. When a pair of the transmitting or receiving diodes is scanned and if the infrared signal is interrupted, the signal change from a receiving diode is outputted to the infrared signal receiving line 19 via the joint of collectors of the column control transistors 26, and then is transmitted to the infrared signal receiver 30 in the control device unit 16. The signal is converted by A/D converter and data then is transferred to the microprocessor 28 for judgment processing of the intercept location. If it is segment scanning, the infrared signal received by different scanning segments needs to be synchronously processed by several infrared receiver circuits and A/D converters, and then the digital signal is inputted into one or several microprocessors for location judgment. For the counting and judgment method of specific intercept location does not belong to the scope of the present invention, it will not described here on. The infrared pulse generated by the infrared pulse generator 31 is transmitted to each transmitting board 4 via the infrared pulse signal line 21. In each transmitting board 4, the joint of the emitters of the column control transistors 26 are connected to the infrared pulse signal line 21. When the transmitting array starts scanning, each connected infrared transmitting diode sends out infrared with frequency, which improves the anti-noise interference capability of infrared transmission. If infrared transmission with frequency is unnecessary, the joint of emitters of the column transistors 26 in the transmitting board 4 can be connected to the grounding line 23 to enable the transmitting diode in the infrared transmitting array to generate only a pulse voltage during infrared transmission.

One or two clock signal output terminals are provided at the clock signal output port 34 on the clock signal generator 29 on the control device unit 16. When the clock signal input terminals at the column drivers 12 on the transmitting circuit board unit and the receiving circuit board are both connected to the same clock signal terminal on the clock signal output port 34 of the clock signal generator 29 via the clock signal line 20, a synchronous sequential scanning of the transmitting and receiving can be realized. If the clock signal lines 20 on the transmitting circuit board unit and the receiving circuit board unit are respectively connected to two different clock signal lines on the clock signal output port 34, the column drivers on the transmitting circuit board unit and the receiving circuit board unit can be respectively driven by two clock signal sources with different in time sequences, thereby non-synchronous sequence scanning of the transmitting and receiving can be realized.

The above embodiments describe how the segment scanning and sequential scanning is realized by using the decoder to control the transmitting and the receiving circuit board units which connected to the control device unit in parallel in the touch screen. If sequential scanning of the transmitting and the receiving circuit board units 4 connected to the control device unit is unnecessary, the decoder 11 on the transmitting circuit board unit and the receiving circuit board unit, the enabling control output terminal 36 controlled by the microprocessor 28, and the enabling control line 24 on each circuit board unit can be removed. When the decoder 11 is not provided on the transmitting and receiving circuit board units 4, the transmitting and receiving circuit board units will be enabled simultaneously after power on due to the transmitting or receiving circuit board units connected to the control device unit 16 in parallel being loss of control by the enabling or disabling control signal. The transmitting or receiving circuit board units follow the clock signal from the clock signal line 20 to respectively scan the transmitting diode and the receiving diode connected respectively to the transmitting circuit board unit and the receiving circuit board unit, whereby several segments scanning consisting of a single transmitting circuit board unit and a single receiving circuit board unit are obtained. This synchronous segment scanning with the transmitting or receiving circuit board unit 4 as the segment unit can only realize the segment scanning of a signal transmitting or receiving circuit board unit. In the technical solution in which the decoder is provided, the segment scanning of a new size transmitting or receiving circuit board unit 5 or 6 obtained from one or several transmitting or receiving circuit board units after cutting and reconnecting can be realized. The number of reconnection is not limited. Different dimension of touch screen circuits can be easily obtained by using different number of the standard size circuit board units 4, and after reconnection, the scanning speed is improved.

### Embodiment 2

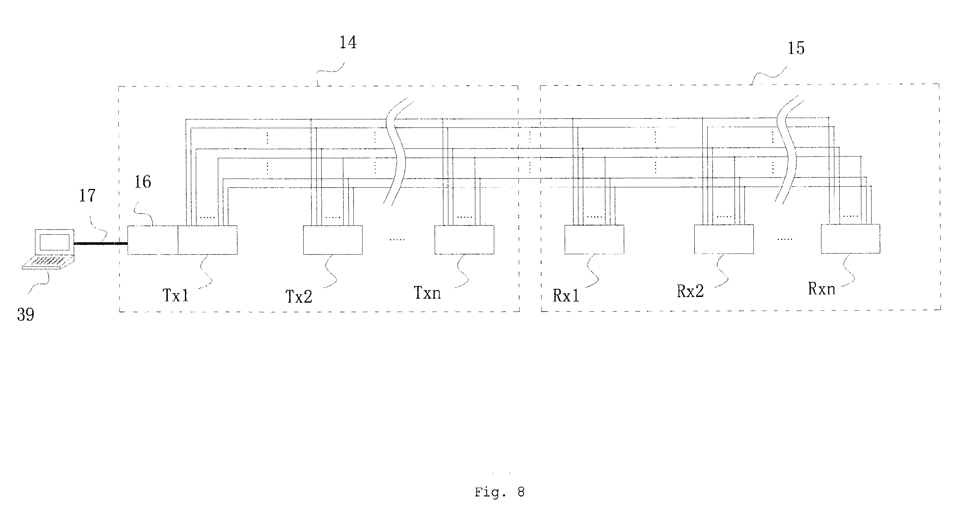

The cutting and reconnecting method of infrared transmitting or receiving circuit board unit has been explained in detail in the embodiment 1. In the embodiment 2, the cutting and reconnecting method of circuit board unit is the same as that in the embodiment 1. The difference between the two embodiments lies in that, in the embodiment 2, the clock signal line 20 for controlling row and column drivers is replaced by the transfer protocol control line such as SMBus, SPI, CAN, QSPI, MICROWIRE, I²C, UART or by address control line. Furthermore, the control of scanning mechanism of the row driver and the column driver is different from that of the row driver and the column driver in the embodiment 1, the I/O expander, the LED driver, the multiplexer, the decoder or the integrated circuit with equivalent circuit is used to replace the clock signal line to control the row and column drivers in the circuit board unit. This modification does not affect the function of the circuit board unit, that is to say, the infrared transmitting or receiving circuit board unit can be also cut and reconnected. As shown in Fig. 8, transmitting and receiving clusters 14, 15 are respectively formed by the infrared transmitting array Tx1, Tx2...Txn and the infrared receiving array Rx1, Rx2...Rxn which are controlled by one or several infrared transmitting circuit board units. The control device unit 16 and the infrared transmitting circuit board unit Tx1 are both provided on a printed circuit board, the control device unit 16 is connected to a computer 19 via USB cable connection, and other portions remain the same.

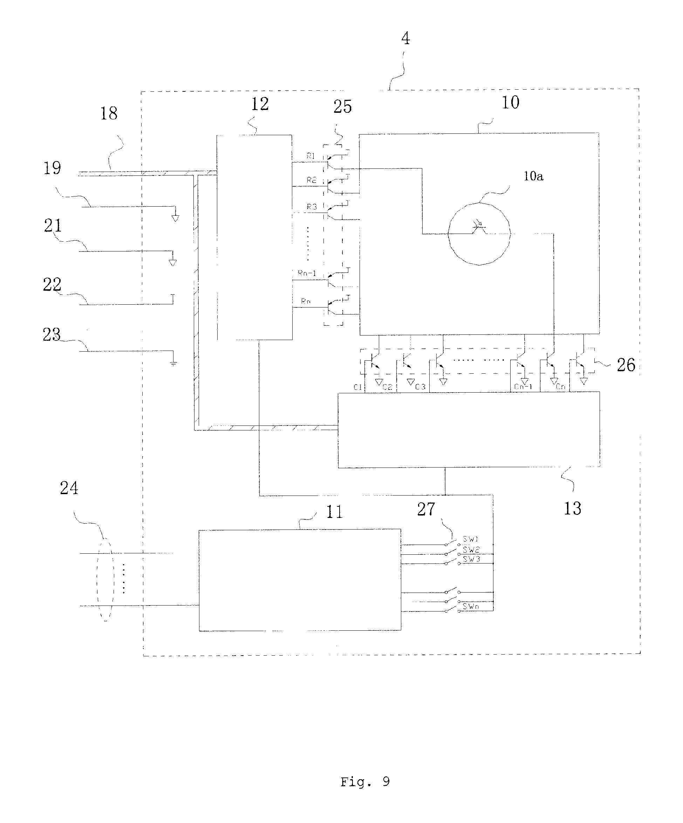

Referring to Fig.9, the transfer protocol line 18 is connected to the row and column drivers of each circuit board unit 4. The transfer protocol line 18 is connected to the transfer protocol control line terminal 35 on the microprocessor 28 connected to the control device unit 16. The row or column driver in each circuit board unit is controlled by the control signal sent out by the microprocessor 28 to output high potential in sequence. If the row and column drivers use the I/O expander or LED driver integrated circuit, a proper connecting manner of the row and column driver such as SPI or I²C can be used, wherein four lines are used for control in the SPI, and only two lines are used for control in the I²C. If the multiplexer integrated circuit or the decoder integrated circuit is used, three or four address lines are required. No matter which manner is used, the scanning sequence of the output ports of the row and column drivers in each circuit board unit is controlled by the command sent out by the microprocessor, and the operation principle is the same as that in the embodiment 1. The number of the control line in the transfer protocol line will only affect the size of the circuit board unit, and will not affect the cutting and application. When the I/O expander is used, the decoder unit 11 in Fig. 9 can be removed, since the address port of the I/O expander can receive the address signal sent out by the microprocessor 28 directly via the transfer protocol line 18, the row or column driver in a circuit board unit is directly selected to realize the fragment scanning.

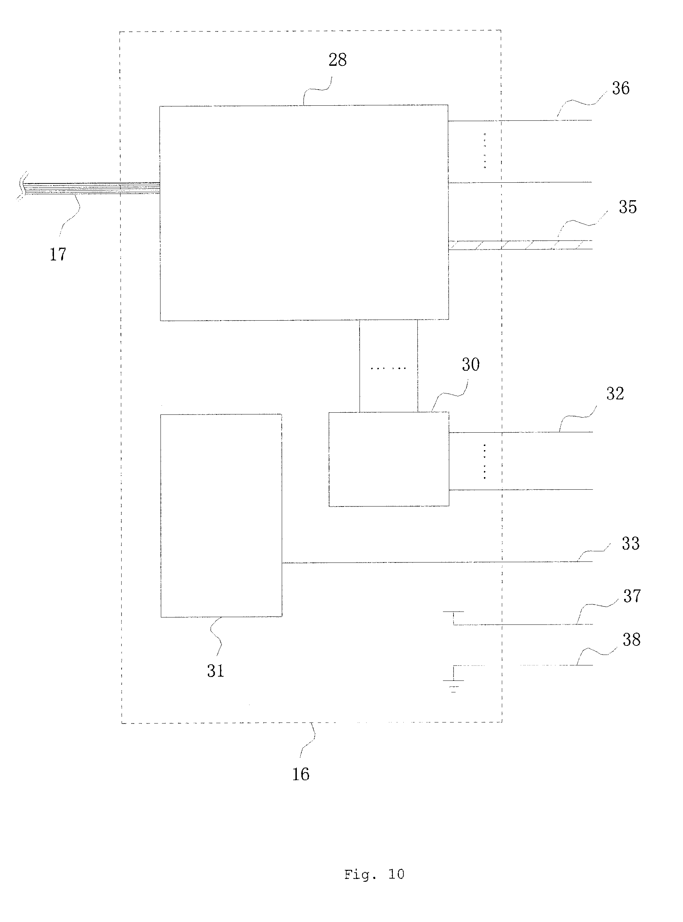

Fig. 10 is an internal principle diagram of the control device unit 16. Compared with the embodiment 1, the clock signal is unnecessary, and the clock signal generator is removed accordingly. The transfer protocol control line terminal 35 on the microprocessor 28 is connected to the row and column driver on each circuit board unit via the transfer protocol control line such as SMBus, SPI, CAN, QSPI, MICROWIRE, I²C and UART, and controls the row and the column control lines to enable the scanning of infrared transmitting or receiving diodes in the array, in order to achieve the inspection of the interrupted position. The other parts in the control device unit 16 are similar to that in Embodiment 1.

It should be emphasized that the above-described embodiments of the present invention, particularly, any preferred embodiments, are merely possible examples of implementations, merely set forth for a clear understanding of the principles of the invention. Many variations and modifications may be made to the above-described embodiment(s) of the invention without departing substantially from the spirit and principles of the invention. All such modifications and variations are intended to be included herein within the scope of this disclosure and the present invention and protected by the following claims.

## Claims

1. An infrared transmitting or receiving circuit board unit, comprising:
infrared transmitting or receiving diodes (10) arranged in arrays;
**characterized in that** the infrared transmitting or receiving circuit board unit is provided throughout the entire circuit board unit with a power supply line (22), a grounding line (23), a clock signal line (20) and an infrared signal receiving line (19); at one end of the circuit board unit is provided with a row driver (12) and a column driver (13), the signal input port of the row driver is connected to the clock signal line (20), and the signal output port of row driver (12) is connected to the signal input port of the column driver (13) ; column driving lines connected to each of the infrared transmitting or receiving diodes (10) in the array are respectively connected to the column driver (13) via column control transistors (26), row driving lines are respectively connected to the row control lines of the row driver (12).

2. The infrared transmitting or receiving circuit board unit of claim 1, **characterized in that** a decoder (11) for enabling the row driver (12) and the column driver (13) and having an enabling control input port is provided on said one end of the circuit board unit in together with row driver (12) and column driver (13).

3. The infrared transmitting or receiving circuit board unit of claim 1 or 2, **characterized in that** the circuit board unit is provided with at least one set of cable soldering joints for connecting with the power supply line (22), the grounding line (23), the clock signal line (20) and the infrared signal receiving line (19).

4. An infrared transmitting or receiving circuit board unit, comprising:
infrared transmitting or receiving diodes (10) arranged in arrays;
**characterized in that** the infrared transmitting or receiving circuit board unit is provided throughout the entire circuit board unit with a power supply line (22), a grounding line (23), a transfer protocol control line (18) and an infrared signal receiving line (19); at one end of the circuit board unit is provided with a row driver (12) and a column driver (13) connected to the transfer protocol control line (18); column driving lines connected to each of the infrared transmitting or receiving diodes (10) in the array are respectively connected to the column driver (13) via column control transistors (26),and row driving lines are respectively connected to the row control lines of the row driver (12).

5. The infrared transmitting or receiving circuit board unit of claim 4, **characterized in that** a decoder (11) for enabling the row driver (12) and the column driver (13) and having an enabling control input port is provided on said one end of the circuit board unit in together with row driver (12) and column driver (13).

6. The infrared transmitting or receiving circuit board unit of claim 4 or 5, **characterized in that** the circuit board unit is provided with at least one set of cable soldering joints for connecting with the power supply line (22), the grounding line (23), the transfer protocol control line (18) and the infrared signal receiving line (19).

7. The infrared transmitting or receiving circuit board unit of claim 2 or 5, **characterized in that** the circuit board unit is provided throughout the entire circuit board unit with enabling control lines (24) that are connected to the enabling input port of the decoder (11).

8. The infrared transmitting or receiving circuit board unit of claim 1, 2, 4 or 5, **characterized in that** the circuit board unit is provided throughout the entire circuit board unit with an infrared pulse signal line (21) that is connected to the column control transistor (26).

9. The infrared transmitting or receiving circuit board unit of claim 1, 2, 4 or 5, **characterized in that** the row driving lines connected to each of the infrared transmitting or receiving diodes (10) are respectively connected to the row driver (12) via row control transistors (25).

10. The infrared tram sitting or receiving circuit board unit of claim 2 or 5, **characterized in that** the output port of the decoder (11) is connected to one end of the switching array (27), the other end of the switching array (27) is connected to the enabling ports of the row driver (12) and the column driver (13).

11. An infrared touch screen, **characterized by** comprising:
a plurality of infrared transmitting or receiving circuit board units having infrared transmitting or receiving diodes (10) in arrays;
a control device unit (16) having control ports;
wherein the control device unit (16) comprises a microprocessor (28) having an enabling control output terminal (36), a clock signal generator (29), an infrared signal receiver (30) connected to the microprocessor (28), a power supply terminal (37) and a ground terminal (38); the clock signal generator (29) is connected to the microprocessor (28) and provided with a clock signal output terminal (34), the infrared signal receiver (30) is provided with infrared signal receiving terminal (32) ; each infrared transmitting or receiving circuit board unit is provided throughout the entire circuit board unit with a power supply line (22), a grounding line (23), a clock signal line (20) and an infrared signal receiving line (19); at one end of the circuit board unit is provided with a row driver (12) and a column driver (13), the signal input port of the row driver (12) is connected to the clock signal line (20), and the signal output port of row driver (12) is connected to the signal input port of the column driver (13); column driving lines connected to each of the infrared transmitting or receiving diodes (10) in the array are respectively connected to the column driver (13) via column control transistors (26), row driving lines are respectively connected to the row control lines of the row driver (12); the power supply line (22) is connected in parallel to the power supply terminal (37) of the control device unit (16), the grounding line (23) is connected in parallel to the ground terminal (38), the clock signal line (20) is connected in parallel to the clock signal output terminal (34), and the infrared signal receiving line (19) is connected in parallel to the infrared signal receiving terminal (32).

12. The infrared touch screen of claim 11, **characterized in that** a decoder (11) for enabling the row driver (12) and the column driver (13) and having an enabling control input port is provided on said one end of the circuit board unit, the enabling control input port of the decoder (11) is connected to the enabling control output terminal (36) of the microprocessor (28).

13. An infrared touch screen, **characterized by** comprising:
a plurality of infrared transmitting or receiving circuit board units having infrared transmitting or receiving diodes (10) in arrays;
a control device unit (16) having control ports;
wherein the control device unit (16) comprises a microprocessor (28) having a transfer protocol control output terminal (35), an infrared signal receiver (30) connected to the microprocessor (28), a power supply terminal (37) and a ground terminal (38); the infrared signal receiver (30) is provided with infrared signal receiving terminal (32);
each infrared transmitting or receiving circuit board unit is provided throughout the entire circuit board unit with a power supply line (22), a grounding line (23), a transfer protocol control line (18) and an infrared signal receiving line (19) ; at one end of the circuit board unit is provided with a row driver (12) and a column driver (13) respectively connected to the transfer protocol control line (18); column driving lines connected to each of the infrared transmitting or receiving diodes (10) in the array are respectively connected to the column driver (13) via column control transistors (26), row driving lines are respectively connected to the row control lines of the row driver (12);
the power supply line (22) is connected in parallel to the power supply terminal (37) of the control device unit, the grounding line (23) is connected in parallel to the ground terminal (38), the infrared signal receiving line (19) is connected in parallel to the infrared signal receiving terminal (32), the transfer protocol control line (18) is connected to the transfer protocol control output terminal (35) of the microprocessor (28).

14. The infrared touch screen of claim 13, **characterized in that** the microprocessor (28) is provided with an enabling control output terminal (36), a decoder (11) for enabling the row driver (12) and the column driver (13) is provided on said one end of the circuit board unit, the enabling control input port of the decoder (11) is connected to the enabling control output terminal (36) of the microprocessor (28).

15. The infrared touch screen of claim 11, 12, 13 or 14, **characterized in that** the control device unit (16) is provided with an infrared pulse generator (31) having an infrared output terminal (33), the circuit board unit is provided throughout the entire circuit board unit with an infrared pulse signal line (21), the infrared pulse signal line (21) is connected to the column control transistor (26) and connected in parallel to the infrared pulse output terminal (33).

16. The infrared touch screen of claim 11, 12, 13 or 14, **characterized in that** the row driving line on the infrared circuit board unit and connected to the infrared transmitting or receiving diode (10) is connected to the row driver (12) via the row control transistor (25).

17. The infrared touch screen of claim 12 or 14, **characterized in that** the circuit board unit is provided throughout the circuit board unit with enabling control lines (24), the enabling control line (24) is connected to the enabling input port of the decoder (11) and connected in parallel to the enabling control output terminal (36) of the microprocessor (28).

18. The infrared touch screen of claim 12 or 14, **characterized in that** the output port of the decoder (11) is connected to one end of the switching array (27), and the other end of the switching array (27) is connected to the enabling ports of the row driver (12) and the column driver (13).
